# EUROPÄISCHE PATENTANMELDUNG

(11) **EP 4 696 441 A1**
(43) Veröffentlichungstag der Anmeldung: **18.02.2026**
(21) Anmeldenummer: 25191569.0
(22) Anmeldetag: 24.07.2025
(51) Int. Cl.: B23F 19/05

(54) **VERFAHREN ZUM HONEN EINES ZAHNRADS MIT EINER BEVELOIDVERZAHNUNG**

(30) Priorität: 05.08.2024 DE 102024122256
(71) Anmelder: Präwema Antriebstechnik GmbH, 37269 Eschwege/Werra (DE)
(72) Erfinder: SCHIEKE, Dipl.-Ing. Jörg, 99092 Erfurt (DE); REINHARDT, Dipl.-Ing. Jörg, 99826 Berka v. d. Hainich (DE); HOLDERBEIN, Dipl.-Ing. Walter, 37269 Eschwege (DE)
(74) Vertreter: Cohausz & Florack

(57) **Zusammenfassung**

Dargestellt und beschrieben ist ein Verfahren zum Honen eines Zahnrads (2) mit einer Beveloidverzahnung (4), umfassend die folgenden Schritte: a) Bereitstellen eines wenigstens abschnittsweise zylinderförmigen Honwerkzeugs (1) und eines zu honenden Zahnrads (2), wobei das Honwerkzeug (1) eine Werkzeugachse (WZA) und eine Verzahnung (3) aufweist, und wobei das Zahnrad (2) eine Werkstückachse (WSA) und eine Beveloidverzahnung (4) aufweist, b) Honen des Zahnrads (2) mittels des Honwerkzeugs (1), wobei das Honwerkzeug (1) und das Zahnrad in einem Achskreuzwinkel (Σ) zueinander angeordnet sind, wobei das Honwerkzeug (1) und das Zahnrad (2) mit einem Achsabstand (A) wenigstens abschnittsweise zueinander beabstandet sind, und wobei die Verzahnung (3) des Honwerkzeugs (3) und die Beveloidverzahnung (4) des Zahnrads (2) sich in wenigstens einem Kontaktabschnitt wenigstens zeitweise kontaktieren. Um ein effektives Honen von Beveloidverzahnung (4) zu vereinfachen, wird vorgeschlagen, dass die Werkzeugachse (WZA) und die Werkstückachse (WSA) mit einer Außermittigkeit (AM) wenigstens abschnittsweise voneinander beabstandet sind.

## Beschreibung

Die vorliegende Erfindung betrifft ein Verfahren zum Honen eines Zahnrads mit einer Beveloidverzahnung, umfassend die folgenden Schritte: a) Bereitstellen eines wenigstens abschnittsweise zylinderförmigen Honwerkzeugs und eines zu honenden Zahnrads, wobei das Honwerkzeug eine Werkzeugachse und eine Verzahnung aufweist, und wobei das Zahnrad eine Werkstückachse und eine Beveloidverzahnung aufweist, b) Honen des Zahnrads mittels des Honwerkzeugs, wobei das Honwerkzeug und das Zahnrad in einem Achskreuzwinkel zueinander angeordnet sind, wobei das Honwerkzeug und das Zahnrad mit einem Achsabstand wenigstens abschnittsweise zueinander beabstandet sind, und wobei die Verzahnung des Honwerkzeugs und die Beveloidverzahnung des Zahnrads sich in wenigstens einem Kontaktabschnitt wenigstens zeitweise kontaktieren.

Die konstruktive Gestalt eines Zahnradgetriebes hängt maßgeblich von der Achsanordnung ab. Die hinsichtlich Auslegung und Fertigung am besten erforschte Getriebeform ist das Stirnradgetriebe, das zwei parallel zueinander verlaufende Achsen mit einem definierten Achsabstand miteinander verbindet. Kegel- und Hypoidradsätze werden vorwiegend dann eingesetzt, wenn zwei Achsen in einem Winkel von etwa 90° verbunden werden sollen. Vor allem für Achsanordnungen mit Achswinkeln kleiner als 20° ist jedoch die Herstellung von Kegelradverzahnungen mit sehr geringem Teilkegelwinkel aufgrund des in herkömmlichen Kegelradverzahnungsmaschinen umgesetzten Erzeugungsprinzips nicht möglich bzw. sehr aufwändig. Um diesen durch Kegelradsätze nicht abgedeckten Achswinkelbereich ebenso wirtschaftlich erschließen zu können, gewinnen konische Stirnräder, die insbesondere als Beveloidverzahnungen bezeichnet werden, zunehmend an Bedeutung.

Bei der Herstellung und Bearbeitung von Beveloidverzahnung, unter anderem beim Honen, ist jedoch zu berücksichtigen, dass die konische Form der Verzahnung, insbesondere der konische Fußkreisdurchmesser-Mantel der Verzahnung, eine Übertragung der herkömmlichen Bearbeitungsverfahren nicht zulässt oder zu nicht befriedigenden Ergebnissen führt. Würde man herkömmlichen Honverfahren auf eine Beveloidverzahnung übertragen, würde es zu einer Kollision des Werkzeugs mit dem konischen Fußkreisdurchmesser-Mantel des zu honenden Zahnrads kommen und/oder das Werkzeug würde nicht flächig an den Zahnflanken des zu honenden Zahnrads bei der Bearbeitung anliegen.

Aus dem Stand der Technik ist beispielsweise die DE 10 2006 054 278 A1 bekannt. Diese offenbart ein Verfahren zum Honen von Beveloid-Verzahnungen. Bei der DE 10 2006 054 278 A1 ist jedoch unter anderem von Nachteil, dass das Honwerkzeug eine konische Form aufweist. Bei der DE 10 2006 054 278 A1 kann beim Honen somit nur eingeschränkt eine Bewegung des Honwerkzeugs entlang der Werkzeugachse oder des Zahnrads entlang der Werkstückachse erfolgen, da es ansonsten zu einer Kollision der Verzahnungen von Honwerkzeug und Zahnrad kommen würde.

Vor diesem Hintergrund liegt der vorliegenden Erfindung die Aufgabe zu Grunde ein Verfahren zum Honen eines Zahnrads mit einer Beveloidverzahnung bereitzustellen, welches ein effektives Honen von Beveloidverzahnung vereinfacht.

Die zuvor genannte Aufgabe wird erfindungsgemäß dadurch gelöst, dass die Werkzeugachse und die Werkstückachse mit einer Außermittigkeit wenigstens abschnittsweise voneinander beabstandet sind.

Im Folgenden werden verschiedene Ausführungsformen des Verfahrens beschrieben, wobei die einzelnen Ausführungsformen beliebig miteinander kombiniert werden können.

Das Verfahren zum Honen eines Zahnrads mit einer Beveloidverzahnung, umfasst den folgenden Schritt: a) Bereitstellen eines wenigstens abschnittsweise zylinderförmigen Honwerkzeugs und eines zu honenden Zahnrads, wobei das Honwerkzeug eine Werkzeugachse und eine Verzahnung aufweist, und wobei das Zahnrad eine Werkstückachse und eine Beveloidverzahnung aufweist. Durch das zylinderförmige Honwerkzeug wird es vereinfacht, dass sich beim Honen, insbesondere wenn sich das Honwerkzeug entlang der Werkzeugachse relativ zu dem zu honenden Zahnrad bewegt, die Zahnflanken des Honwerkzeugs und des zu honenden Zahnrads durchgängig und nicht nur punktuell kontaktieren. Dies ist insbesondere der Fall, wenn zwischen der Verzahnung des Honwerkzeugs und der Beveloidverzahnung des Zahnrads ein Kippwinkel vorliegt, wobei auf den Kippwinkel nachfolgend noch eingegangen wird. Die Beveloidverzahnung des zu honenden Zahnrads weist vorzugsweise wenigstens abschnittsweise, insbesondere über die gesamte Breite der Beveloidverzahnung, einen konischen Fußkreisdurchmesser-Mantel, einen zylindrischen Grundkreisdurchmesser-Mantel und/oder einen zylindrischen Teilkreisdurchmesser-Mantel auf. Alternativ oder zusätzlich kann die Beveloidverzahnung des zu honenden Zahnrads wenigstens abschnittsweise, insbesondere über die gesamte Breite der Beveloidverzahnung, einen konischen oder zylindrischen Kopfreisdurchmesser-Mantel aufweisen. Im Schritt a) kann zudem eine Zahnradbearbeitungsmaschine bereitgestellt werden. Durch diese Maschine kann ein schnelles und effizientes Honen erreicht werden. Die Werkzeugachse ist vorzugsweise die Rotationsachse und/oder Mittelachse des Honwerkzeugs und/oder die Werkstückachse ist vorzugweise die Rotationsachse und/oder Mittelachse des Werkstücks. Vorteilhafterweise kann vorgesehen sein, dass die Breite des Honwerkzeugs, vorzugsweise entlang der Werkzeugachse, breiter ist als die Breite des Zahnrads, vorzugsweise entlang der Werkstückachse. Alternativ oder zusätzlich kann vorgesehen sein, dass die Breite des Honwerkzeugs, vorzugsweise entlang der Werkzeugachse, wenigstens dem 1,0-fachen, vorzugsweise wenigstens dem 2,0-fachen, des Moduls der Beveloidverzahnung des Zahnrads entspricht. Hierdurch wird ein Honwerkzeug bereitgestellt, welches eine möglichst effiziente Bearbeitung vereinfacht.

Bei den in dieser Offenbarung beschriebenen Mänteln handelt es sich jeweils um den Mantel bzw. die Mantelfläche, der bzw. die sich entlang der Breite des Honwerkzeugs und/oder des zu honenden Zahnrads, vorzugsweise der Breite der jeweiligen Verzahnung des Honwerkzeugs und/oder des zu honenden Zahnrads, für die jeweilig genannten Durchmesser ausbildet
Das Verfahren umfasst zudem den folgenden Schritt: b) Honen des Zahnrads mittels des Honwerkzeugs, wobei das Honwerkzeug und das Zahnrad in einem Achskreuzwinkel zueinander angeordnet sind, wobei das Honwerkzeug und das Zahnrad mit einem Achsabstand wenigstens abschnittsweise zueinander beabstandet sind, und wobei die Verzahnung des Honwerkzeugs und die Beveloidverzahnung des Zahnrads sich in wenigstens einem Kontaktabschnitt wenigstens zeitweise kontaktieren. Hierdurch werden das zu honende Zahnrad und das Honwerkzeug in eine Position gebracht, die eine effektive Bearbeitung vereinfacht. Mittels des Achskreuzwinkels kann bei der Honbearbeitung die Schnittgeschwindigkeit eingestellt werden. Der Achskreuzwinkel ist vorzugsweise größer 0°, sodass eine hinreichende Schnittgeschwindigkeit vorliegt. Vorteilhafterweise sind die Werkzeugachse und die Werkstückachse mit dem Achsabstand zueinander beabstandet und/oder die Werkzeugachse und die Werkstückachse sind in dem Achskreuzwinkel zueinander angeordnet. Der Achsabstand ist vorzugsweise größer als 0 mm. Die Verzahnung des Honwerkzeugs und/oder die Beveloidverzahnung des Zahnrads umfassen jeweils wenigstens einen Zahn, vorzugsweise jeweils eine Vielzahl von Zähnen, mit jeweils wenigstens einer Zahnflanke, vorzugsweise jeweils zwei Zahnflanken, je Zahn. In Schritt b) wird vorzugsweise der wenigstens eine Zahn, vorzugsweise die Zahnflanke des wenigstens einen Zahnes, der Beveloidverzahnung gehont.

Der Kontaktabschnitt befindet sich vorzugsweise im Eingriffsbereich der Verzahnung des Honwerkzeugs und der Beveloidverzahnung des zu honenden Zahnrads, wobei der Kontaktabschnitt einen primären Kontaktabschnitt am Honwerkzeug und/oder einen sekundären Kontaktabschnitt am zu honenden Zahnrad umfasst. Vorteilhafterweise umfasst der primäre Kontaktabschnitt die wenigstens eine Berührlinie an der Verzahnung des Honwerkzeugs und/oder umfasst der sekundäre Kontaktabschnitt die wenigstens eine Berührlinie an der Beveloidverzahnung des zu honenden Zahnrads.

Vorteilhafterweise kann vorgesehen sein, dass in Schritt b) das Honwerkzeug und/oder das Zahnrad an der Zahnradbearbeitungsmaschine angeordnet sind und/oder das Honen mittels der Zahnradbearbeitungsmaschine erfolgt. Mittels der Zahnradbearbeitungsmaschine kann das Ausrichten des Honwerkzeugs und des Zahnrads zueinander sowie die Bearbeitung des Zahnrads schnell und präzise erfolgen
Das Verfahren sieht zudem vor, dass die Werkzeugachse und die Werkstückachse mit einer Außermittigkeit wenigstens abschnittsweise voneinander beabstandet sind. Hierdurch wird ein Kippwinkel in Form eines kinematischen Neigungswinkels zwischen der Verzahnung des Honwerkzeugs und der Beveloidverzahnung des zu honenden Zahnrads eingestellt. Dies hat wiederum zur Folge, insbesondere im Zusammenspiel mit dem zylinderförmigen Honwerkzeug, dass sich beim Honen, insbesondere wenn sich das Honwerkzeug entlang der Werkzeugachse relativ zu dem zu honenden Zahnrad bewegt, die Zahnflanken des Honwerkzeugs und des zu honenden Zahnrads durchgängig und nicht nur punktuell kontaktieren. Zudem wird durch den Kippwinkel, trotz des konischen Fußkreisdurchmesser-Mantels der Beveloidverzahnung, verhindert, dass es beim Honen zu einer Kollision zwischen der Verzahnung des Honwerkzeugs und der Beveloidverzahnung des Zahnrads kommt. Die Außermittigkeit ist der Abstand zwischen der Mittenebene des Zahnrads und des Werkzeugachsenbezugspunkts des Honwerkzeugs. Die Mittenebene des Zahnrads verläuft durch die Werkstückachse und/oder parallel zur Achsabstandsrichtung, das heißt parallel zu der Richtung, entlang der der Achsabstand verläuft. Der Werkzeugachsenbezugspunkt ist im zylindrischen Abschnitt des Honwerkzeugs, vorzugsweise im zylindrischen Abschnitt der Verzahnung des Honwerkzeugs, angeordnet und/oder der Werkzeugachsenbezugspunkt ist auf der Werkzeugachse angeordnet, vorzugsweise im Bereich der Verzahnung des Honwerkzeugs und/oder im Bereich des Kontaktabschnitts, insbesondere in der Mitte der Verzahnung des Honwerkzeugs entlang der Werkzeugachse und/oder in der Mitte des Kontaktabschnitts entlang der Werkzeugachse. Die Außermittigkeit kann vorzugsweise im Schritt b) eingestellt werden. Für die Erzielung des beschriebenen Kippwinkels ist eine Verkippung des Honwerkzeugs und/oder des Zahnrads mittels einer Maschinenachse einer Zahnradbearbeitungsmaschine nicht erforderlich, sodass außerdem eine konstruktiv einfachere Zahnradbearbeitungsmaschine mit wenigen verstellbaren Maschinenachsen eingesetzt werden kann. Aufgrund der Außermittigkeit kann beispielsweise bei einer üblichen Zahnradbearbeitungsmaschine auf wenigstens eine der Schwenkachsen verzichtet werden und somit vorzugsweise eine Maschinenachse eingespart werden.

Gemäß einer Ausgestaltung ist vorgesehen, dass der Achskreuzwinkel größer 0°, vorzugsweise wenigstens 5°, insbesondere wenigstens 10°, und/oder höchstens 25°, vorzugsweise höchstens 20°, insbesondere höchstens 15°, ist. Hierdurch wird eine Achskreuzwinkel eingestellt, welcher zu einer vorteilhaften Schnittgeschwindigkeit für das Honen führt.

Gemäß einer Ausgestaltung ist vorgesehen, dass das Honwerkzeug, vorzugsweise die Verzahnung des Honwerkzeug, wenigstens einen zylindrischen Abschnitt aufweist, und dass der zylindrische Abschnitt einen zylindrischen Kopfkreisdurchmesser-Mantel, einen zylindrischen Grundkreisdurchmesser-Mantel, einen zylindrischen Teilkreisdurchmesser-Mantel und/oder einen zylindrischen Fußkreisdurchmesser-Mantel aufweist und/oder in Schritt b) der Kontaktabschnitt in dem zylindrischen Abschnitt angeordnet ist. Hierdurch wird ein Honwerkzeug mit einer zylindrischen Verzahnung bereitgestellt, welche einen durchgängigen Kontakt beim Honen im Kontaktabschnitt vereinfacht.

Gemäß einer Ausgestaltung ist vorgesehen, dass in Schritt b) sich die Zahnflanke wenigstens eines Zahns der Verzahnung des Honwerkzeugs und die Zahnflanke wenigstens eines Zahns der Beveloidverzahnung des Zahnrads, vorzugsweise im Kontaktabschnitt kontaktieren, und/oder dass in Schritt b) ein Linienkontakt im Kontaktabschnitt zwischen der Verzahnung des Honwerkzeugs und der Beveloidverzahnung des Zahnrads, vorzugsweise der Zahnflanke des wenigstens eines Zahns der Verzahnung des Honwerkzeugs und der Zahnflanke des wenigstens eines Zahns der Beveloidverzahnung des Zahnrads, vorliegt. Hierdurch wird es vereinfacht einen durchgängigen Kontakt beim Honen im Kontaktabschnitt zu erzielen. Die Erstreckung des Linienkontakts entspricht vorzugsweise wenigstens dem 0,5-fachen, vorzugsweise wenigstens dem 0,75-fachen, insbesondere wenigstens dem 1,0-fachen, der Breite des zylindrischen Abschnitts der Verzahnung des Honwerkzeugs, vorzugsweise der Breite des zylindrischen Abschnitts der Verzahnung des Honwerkzeugs entlang der Werkzeugachse, und/oder die Erstreckung des Linienkontakts entspricht der Breite, vorzugsweise entlang der Werkzeugachse, der Überdeckung der Verzahnung des Honwerkzeugs und der Beveloidverzahnung des Zahnrads.

Gemäß einer Ausgestaltung ist vorgesehen, dass die Form der beiden Zahnflanken wenigstens eines Zahns, vorzugsweises die Form der beiden Zahnflanken jeweils aller Zähne, der Verzahnung des Honwerkzeugs asymmetrisch zueinander ist. Hierdurch wird es vereinfacht trotz der Beveloidverzahnung des zu honenden Zahnrads und des Kippwinkels einen durchgängigen Kontakt beim Honen im Kontaktabschnitt zu erzielen. Hierbei ist es insbesondere von Vorteil, wenn der Grundkreisdurchmesser und/oder der Eingriffswinkel der beiden Zahnflanken des wenigstens eines Zahns, vorzugsweises der beiden Zahnflanken jeweils aller Zähne, der Verzahnung des Honwerkzeugs unterschiedlich sind. Dies vereinfacht es noch weiter einen durchgängigen Kontakt beim Honen im Kontaktabschnitt zwischen Honwerkzeug und Zahnrad zu erzielen.

Gemäß einer Ausgestaltung ist vorgesehen, dass in Schritt b) das Zahnrad und das Honwerkzeug relativ zueinander verschoben werden, vorzugsweise das Zahnrad entlang der Werkstückachse, vorzugsweise vor und zurück, bewegt wird und/oder das Honwerkzeug entlang der Werkzeugachse, vorzugsweise vor und zurück, bewegt wird. Hierdurch wird eine oszillierende und/oder lineare Bewegung beim Honen erzeugt, welche ein effizientes Honen vereinfacht. Die Bewegung des Zahnrads und des Honwerkzeugs relativ zueinander, vorzugsweise die Bewegung des Honwerkzeugs und/oder des Zahnrads, kann vorteilhafterweise durch die Zahnradbearbeitungsmaschine erzeugt werden. Die Relativbewegung zwischen dem Zahnrad und dem Honwerkzeug kann vorzugsweise mit einer Geschwindigkeit, vorzugsweise Vorschubgeschwindigkeit, von wenigstens 50 mm/min, vorzugsweise wenigstens 100 mm/min, insbesondere wenigstens 150 mm/min, und/oder von höchstens 500 mm/min, vorzugsweise höchstens 450 mm/min, insbesondere höchstens 400 mm/min, erfolgen.

Gemäß einer Ausgestaltung ist vorgesehen, dass in Schritt b) das Zahnrad und das Honwerkzeug relativ zueinander rotieren, vorzugsweise das Zahnrad um die Werkstückachse rotiert und/oder das Honwerkzeug um die Werkzeugachse rotiert. Hierdurch wird eine rotierende Bewegung beim Honen erzeugt, welche ein effizientes Honen vereinfacht. Die Rotation des Zahnrads und des Honwerkzeugs relativ zueinander, vorzugsweise die Rotation des Honwerkzeugs und/oder des Zahnrads, kann vorteilhafterweise durch die Zahnradbearbeitungsmaschine erzeugt werden. Das Honwerkzeug kann vorzugsweise im Schritt b) mit einer Rotationsgeschwindigkeit von wenigstens 500 1/min, vorzugsweise wenigstens 2500 1/min, insbesondere wenigstens 5000 1/min, und/oder höchstens 15000 1/min, vorzugsweise höchstens 12500 1/min, insbesondere höchstens 10000 1/min, rotieren. Alternativ oder zusätzlich kann das Zahnrad vorzugsweise mit einer entsprechenden Rotationsgeschwindigkeit angepasst um das Übersetzungsverhältnis zwischen der Verzahnung des Honwerkzeugs und der Beveloidverzahnung des Zahnrads im Schritt b) rotieren.

Gemäß einer Ausgestaltung umfasst das Verfahren den Schritt a1): Bereitstellen einer Zahnradbearbeitungsmaschine. Durch eine Zahnradbearbeitungsmaschine kann ein schnelles und effizientes Honen erreicht werden. Das Honwerkzeug und/oder das Zahnrad können im Schritt b) an der Zahnradbearbeitungsmaschine angeordnet sein, vorzugsweise an der Zahnradbearbeitungsmaschine aufgespannt sein.

Zudem ist vorgesehen, dass die Zahnradbearbeitungsmaschine wenigstens eine Translationsachse, vorzugsweise wenigstens zwei Translationsachsen, aufweist, wobei das Honwerkzeug und/oder das Zahnrad entlang der wenigstens einen Translationsachse, vorzugsweise den wenigstens zwei Translationsachsen, verschoben werden kann. Hierdurch kann wenigstens eine translatorische Bewegung des Honwerkzeugs und/oder des Zahnrads mittels der Zahnradbearbeitungsmaschine erzielt werden, beispielsweise zur Einstellung des Achsabstands und/oder der Außermittigkeit. Zusätzlich kann die Zahnradbearbeitungsmaschine wenigstens eine Rotationsachse, vorzugsweise wenigstens zwei Rotationsachsen, aufweisen. Hierdurch können das Honwerkzeug und/oder das Zahnrad mittels der Zahnradbearbeitungsmaschine rotiert werden. Alternativ oder zusätzlich kann die Zahnradbearbeitungsmaschine wenigstens eine Schwenkachse aufweisen, hierdurch kann eine Verschwenkung des Honwerkzeugs und des Zahnrads zueinander erzeugt werden, beispielsweise zur Einstellung des Achskreuzwinkels. Bei der wenigstens einen Translationsachse, vorzugsweise den wenigstens zwei Translationsachsen, bei der wenigstens einen Rotationsachse, vorzugsweise den wenigstens zwei Rotationsachsen, und/oder bei der wenigstens einen Schwenkachse kann es sich jeweils vorzugsweise um eine Maschinenachse der Zahnradbearbeitungsmaschine handeln.

Gemäß einer Ausgestaltung ist vorgesehen, dass, vorzugsweise in Schritt b), die Außermittigkeit, vorzugsweise ausschließlich, mittels einer Verschiebung des Honwerkzeugs und/oder des Zahnrads, vorzugsweise entlang der Translationsachse, insbesondere einer der zwei Translationsachsen, eingestellt wird. Für die Erzielung des zuvor beschriebenen Kippwinkels ist eine Verkippung des Honwerkzeugs und/oder des Zahnrads mittels einer Maschinenachse einer Zahnradbearbeitungsmaschine somit nicht erforderlich, sodass außerdem eine konstruktiv einfachere Zahnradbearbeitungsmaschine mit weniger verstellbaren Maschinenachsen eingesetzt werden kann. Aufgrund der Außermittigkeit kann beispielsweise bei einer üblichen Zahnradbearbeitungsmaschine auf wenigstens eine Schwenkachse verzichtet werden. Bei der Verschiebung handelt es sich vorzugsweise um eine Verschiebung des Honwerkzeugs relativ zum Zahnrad und/oder eine Verschiebung des Zahnrads relativ zum Honwerkzeug. Vorzugsweise ist der Kippwinkel ein andere Winkel als der Achskreuzwinkel und/oder zusätzlich zum Achskreuzwinkel vorgesehen. Der Kippwinkel kann vorzugsweise zwischen der Werkzeugachse und der Werkstückachse vorliegen.

Alternativ oder zusätzlich kann vorgesehen sein, dass, vorzugsweise in Schritt b), ein Kippwinkel zwischen der Verzahnung des Honwerkzeugs und der Beveloidverzahnung des Zahnrads, vorzugsweise ausschließlich, mittels einer Verschiebung des Honwerkzeugs und/oder des Zahnrads, vorzugsweise entlang der Translationsachse, insbesondere einer der zwei Translationsachsen, eingestellt wird. Hierdurch kann, insbesondere im Zusammenspiel mit dem zylinderförmigen Honwerkzeug, erreicht werden, dass sich beim Honen, insbesondere wenn sich das Honwerkzeug entlang der Werkzeugachse relativ zu dem zu honenden Zahnrad bewegt, die Zahnflanken des Honwerkzeugs und des zu honenden Zahnrads durchgängig und nicht nur punktuell kontaktieren. Zudem wird durch den Kippwinkel, trotz des konischen Fußkreisdurchmesser-Mantels der Beveloidverzahnung, verhindert, dass es beim Honen zu einer Kollision zwischen der Verzahnung des Honwerkzeugs und der Beveloidverzahnung des Zahnrads kommt. Der Kippwinkel kann vorzugsweise ein kinematischer Neigungswinkel zwischen der Verzahnung des Honwerkzeugs und der Beveloidverzahnung des zu honenden Zahnrads sein. Bei der Verschiebung handelt es sich vorzugsweise um eine Verschiebung des Honwerkzeugs relativ zum Zahnrad und/oder eine Verschiebung des Zahnrads relativ zum Honwerkzeug. Vorzugsweise ist der Kippwinkel ein andere Winkel als der Achskreuzwinkel und/oder zusätzlich zum Achskreuzwinkel vorgesehen. Der Kippwinkel kann vorzugsweise zwischen der Werkzeugachse und der Werkstückachse vorliegen.

Alternativ oder zusätzlich kann zudem vorgesehen sein, dass, vorzugsweise in Schritt b), der Kippwinkel nicht mittels einer Verschwenkung des Honwerkzeugs und/oder des Zahnrads, vorzugsweise um eine Schwenkachse der Zahnradbearbeitungsmaschine, eingestellt wird. Hierdurch kann auf einfache Weise, insbesondere ohne ein Verschwenken, des Honwerkzeugs und/oder des Zahnrads der Kippwinkel, vorzugsweise in Form eines kinematischen Neigungswinkels, zwischen Honwerkzeug und Zahnrad eingestellt werden.

Weitere Merkmale und Vorteile des Verfahrens ergeben sich aus der nachfolgenden Beschreibung von Ausführungsbeispielen, wobei auf die beigefügte Zeichnung Bezug genommen wird.

In der Zeichnung zeigen
- Fig. 1: ein Honwerkzeug und ein zu honendes Zahnrad in Eingriff miteinander in einer Vorderansicht des Zahnrads, und
- Fig. 2: das Honwerkzeug und das zu honende Zahnrad aus Fig. 1 in einer Seitenansicht des Zahnrads,
- Fig. 3: das Honwerkzeug und das zu honende Zahnrad aus Fig. 1 in einer Vorderansicht des Honwerkzeugs, und
- Fig. 4: das Honwerkzeug und das zu honende Zahnrad aus Fig. 1 in einer geschnittenen Draufsicht des Honwerkzeugs.

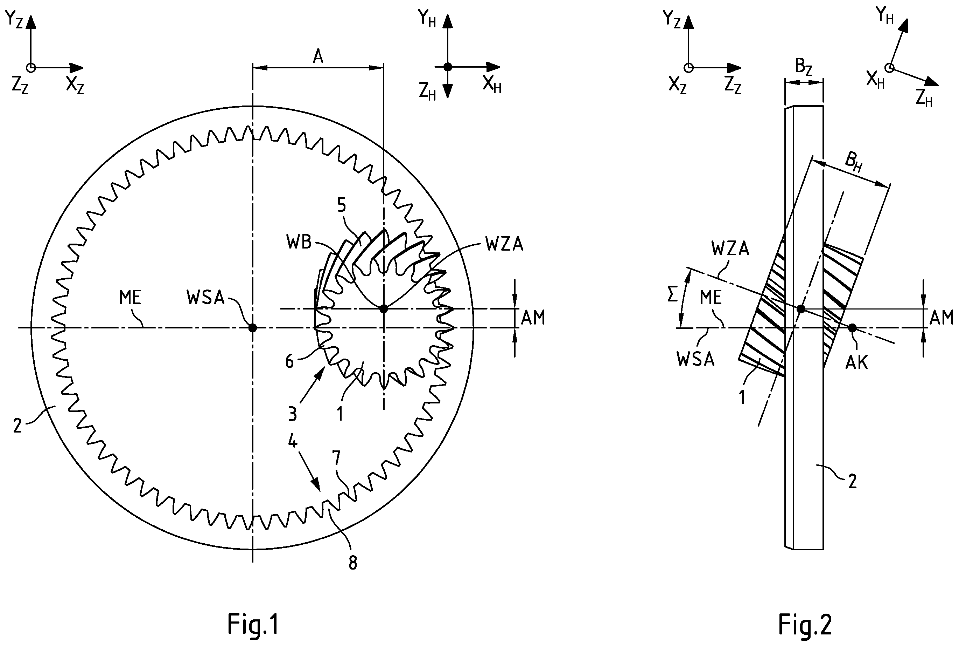

Fig. 1 zeigt ein Honwerkzeug 1 und ein zu honendes Zahnrad 2 in Eingriff miteinander in einer Vorderansicht des Zahnrads. Das Honwerkzeug 1 ist zylinderförmig und weist eine Verzahnung 3 auf. Die Verzahnung 3 des Honwerkzeugs 1 kontaktiert in der in Fig. 1 dargestellten Ausrichtung des Honwerkzeugs 1 und des Zahnrads 2 die Beveloidverzahnung 4 des zu honenden Zahnrads 2. Hierbei kontaktieren sich wenigstens eine Zahnflanke 5 wenigstens eines Zahns 6 der Verzahnung des Honwerkzeugs 1 und wenigstens eine Zahnflanke 7 wenigstens eines Zahns 8 der Beveloidverzahnung 4 des Zahnrads 2 in einem Kontakabschnitt. Das Honwerkzeug 1, insbesondere die Werkzeugachse WZA des Honwerkzeugs 1, ist von dem Zahnrad 2, insbesondere der Werkstückachse WSA des Zahnrads 2, mit einem Achsabstand A beabstandet. Zudem sind das Honwerkzeug 1, insbesondere die Werkzeugachse WZA des Honwerkzeugs 1, von dem Zahnrad 2, insbesondere der Werkstückachse WSA des Zahnrads 2, mit einem Achskreuzwinkel Σ zueinander angeordnet (der Achskreuzwinkel Σ ist in Fig. 2 eingezeichnet). Während des Honens wird das Honwerkzeug 1 entlang der Werkzeugachse WZA vor- und zurückbewegt sowie das Honwerkzeug 1 und das Zahnrad 2 relativ zueinander bewegt.

Das Honwerkzeug 1 der dargestellten Ausführungsform weist über die gesamte Breiteeine Verzahnung 3 mit zylindrischem Kopfkreisdurchmesser-Mantel, zylindrischem Grundkreisdurchmesser-Mantel, zylindrischem Teilkreisdurchmesser-Mantel und zylindrischem Fußkreisdurchmesser-Mantel auf. Bei der gezeigten Ausführungsform ist somit die Breite B_{H} der Verzahnung 3 des Honwerkzeugs 1 (nicht zu verwechseln mit der Zahnbreite) identisch mit der Breite des Honwerkzeugs 1. Ebenso ist bei der gezeigten Ausführungsform die Breite Bz der Beveloidverzahnung 4 des Zahnrads 2 identisch mit der Breite des Zahnrads 2. Es kann jedoch auch beispielsweise vorgesehen sein, dass lediglich ein Teil des Honwerkzeugs 1 in Form eines zylindrischen Abschnitts eine entsprechende Verzahnung 3 aufweist.

Die Beveloidverzahnung 4 des dargestellten Zahnrads 2 weist wiederum einen konischen Fußkreisdurchmesser-Mantel auf, weshalb es für ein effizientes sowie kollisionsfreies Honen von Vorteil ist, wenn zwischen der Verzahnung 3 des Honwerkzeugs 1 und der Beveloidverzahnung 4 des Zahnrad 2 ein Kippwinkel θ vorliegt. Um dies auf konstruktiv unkomplizierte Weise zu erzielen, sind das Honwerkzeug 1, insbesondere die Werkzeugachse WZA des Honwerkzeugs 1, und das Zahnrad 2, insbesondere die Werkstückachse WSA des Zahnrads 2, mit einer Außermittigkeit AM beabstandet. Hierdurch ergibt sich zwischen der Verzahnung 3 des Honwerkzeugs 1 und der Beveloidverzahnung 4 des Zahnrad 2 ein Kippwinkel θ in Form eines kinemtaischen Neigungswinkel. Die Außermittigkeit AM ist dabei der Abstand zwischen der Mittenebene ME des Zahnrads 2 und dem Werkzeugachsenbezugspunkts WB des Honwerkzeugs 1.

Für das bessere Verständnis der Ausrichtung des Honwerkzeugs 1 und des Zahnrads 2 sind in den Fig. 1 bis 4 jeweils die Ausrichtung des Honwerkzeugs 1 mittels eines eigenen Koordinatensystems umfassend die Achsen X_{H}, Y_{H}, Z_{H} sowie die Ausrichtung des Zahnrads 2 mittels eines eigenen Koordinatensystems umfassend die Achsen Xz, Yz, Zz dargestellt. Die Werkstückachse WSA verläuft dabei parallel zu der Achse Zz und die Werkzeugachse WZA parallel zu der Achse Z_{H}. Aufgrund des Achskreuzwinkel Σ sowie des nachfolgend noch beschriebenen Kippwinkels θ sind das Honwerkzeug 1 und das Zahnrad 2 in zueinander verkippt, wobei durch den Kippwinkel θ der flächige Kontakt zwischen den Verzahnungen 3, 4 vereinfacht wird.

Fig. 2 zeigt das Honwerkzeug 1 und das zu honende Zahnrad 2 aus Fig. 1 in einer Seitenansicht des Zahnrads. Der Achskreuzwinkel Σ ist in dieser Ansicht gut zu erkennen, ebenso wie die sich hieraus ergebende Ausrichtung der Werkzeugachse WZA und Werkstücksachse WSA zueinander. Die Werkzeugachse WZA und die Werkstückachse WSA kreuzen sich dabei im Achskreuzpunkt AK. Aufgrund der Anordnung des Honwerkzeugs 1 und des Zahnrads 2 befindet sich der Achskreuzpunkt AK jedoch nicht wie üblich beim Honen im Bereich des Kontaktabschnitts zwischen der Verzahnung 3 des Honwerkzeugs 1 und der Beveloidverzahnung 4 des Zahnrads 2, sondern außerhalb davon. Um diese Anordnung des Achskreuzpunkts AK sowie den sich hieraus ergebenden Kippwinkel θ einzustellen, ist das Honwerkzeug 1 um die Außermittigkeit AM relativ zu dem Zahnrad 2 versetzt angeordnet. Dies kann in der gezeigten Ausführungsform beispielsweise durch ein Verschieben des Honwerkzeugs 1 entlang einer Translationsachse, beispielsweise einer vertikalen Maschinenachse, einer Zahnradbearbeitungsmaschine erfolgen, an welcher Zahnradbearbeitungsmaschine das Honwerkzeug 1 und das Zahnrad 2 für das Honen angeordnet sind. Die Translationsachse, entlang der das Honwerkzeug 1 und das Zahnrad 2 verschoben wurden, ist bei der gezeigten Ausführungsform die Y-Achse Yz des Zahnrads 2. Durch eine derartige Einstellung der Außermittigkeit AM kann auf eine zusätzliche Maschinenachse zur Erzeugung einer Verkippung verzichtet werden. Alternativ oder zusätzlich wäre es auch denkbar bei eingestelltem Achskreuzwinkel Σ das Honwerkzeug 1 und/oder das Zahnrad 2 entlang ihrer jeweiligen Achsen WZA, WSA linear zu verschieben, um somit die Außermittigkeit AM zu erzeugen.

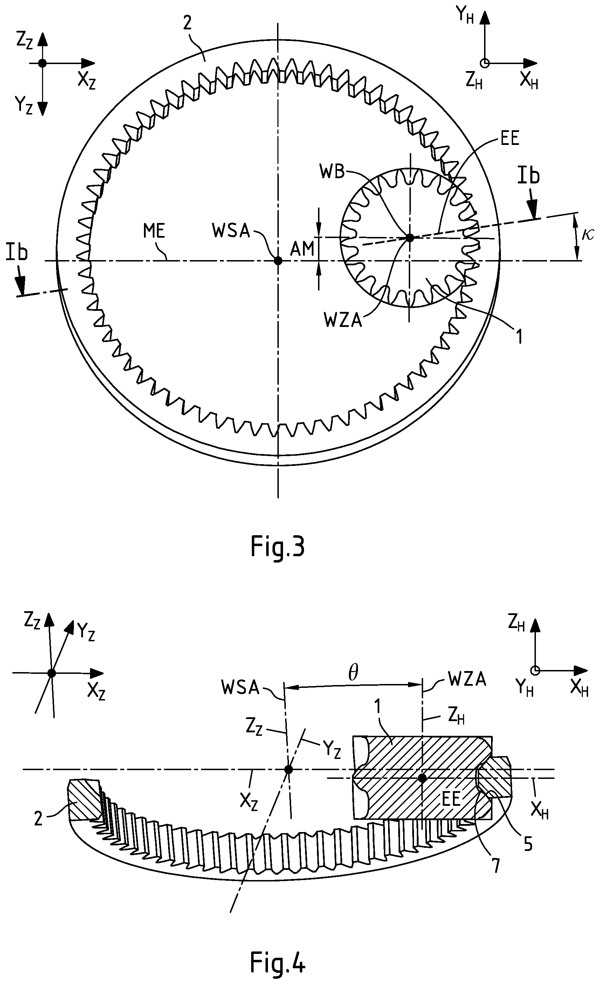

Fig. 3 zeigt das Honwerkzeug 1 und das zu honende Zahnrad 2 aus Fig. 1 in einer Vorderansicht des Honwerkzeugs 1. Hierbei ist der Positionswinkel κ zwischen der Verzahnung 3 des Honwerkzeugs 1 und der Beveloidverzahnung 4 des Zahnrads 2 eingezeichnet. Der Positionswinkel κ entspricht dabei vorzugsweise dem Winkel zwischen einer Linie, welche durch die Mittenebene ME und parallel zur Achse X_{H} verläuft, relativ zu einer Line, welche durch den Werkzeugachsenbezugspunkt WB und den Berührpunkt der Verzahnungen 2 und der Beveloidverzahnung 4, vorzugsweise in der Ebene aufgespannt durch die Achsen X_{H} und Y_{H}, verläuft. Entlang des Positionswinkel κ und durch die Werkzeugachse WZA erstreckt sich die Ebene EE, durch welche der Schnitt Ib-Ib verläuft, der in der nachfolgenden Fig. 4 dargestellt ist.

Fig. 4 zeig das Honwerkzeug 1 und das zu honenden Zahnrad 2 aus Fig. 1 in einer geschnittenen Draufsicht des Honwerkzeugs 1. Zu erkennen ist in diesem Schnitt, dass die Werkzeugachse WZA und die Werkstückachse WSA zusätzlich zu dem Achskreuzwinkel Σ noch um den Kippwinkel θ zueinander verkippt sind. Der Kippwinkel θ ist hierbei durch die Außermittigkeit AM erzeugt worden und der Kippwinkel θ führt, insbesondere im Zusammenspiel mit dem zylinderförmigen Honwerkzeug 1, dazu, dass sich beim Honen, insbesondere wenn sich das Honwerkzeug 1 entlang der Werkzeugachse WZA relativ zu dem zu honenden Zahnrad 2 bewegt, die Zahnflanken 5 des Honwerkzeugs 1 und die Zahnflanke 7 des zu honenden Zahnrads 2 durchgängig sowie flächig und nicht nur punktuell kontaktieren. Zudem wird durch den Kippwinkel θ, trotz des konischen Fußkreisdurchmesser-Mantels der Beveloidverzahnung 4, verhindert, dass es beim Honen zu einer Kollision zwischen der Verzahnung 3 des Honwerkzeugs 1 und der Beveloidverzahnung 4 des Zahnrads 2 kommt, wenn Honwerkzeug 1 und Zahnrad 2 relativ zueinander bewegt werden. In der Fig. 4 ist in dem gezeigten Schnitt gut zu erkennen, dass die die Zahnflanken 5 des Honwerkzeugs 1 und die Zahnflanke 7 des Zahnrads 2 sich bereits in diesem Ausschnitt flächig kontaktieren und nicht nur punktuell, wobei der Kontaktabschnitt sich noch weiter entlang der jeweiligen Zahnbreite der Verzahnung 3 des Honwerkzeugs 1 und der Zahnbreite der Beveloidverzahnung 4 des Zahnrads 2 erstreckt.

### Bezugszeichenliste:

- 1: Honwerkzeug
- 2: Zahnrad
- 3: Verzahnung des Honwerkzeugs
- 4: Beveloidverzahnung des Zahnrads
- 5: Zahnflanke
- 6: Zahn der Verzahnung des Honwerkzeugs
- 7: Zahnflanke
- 8: Zahn der Beveloidverzahnung des Zahnrads

- A: Achsabstand
- AM: Außermittigkeit
- AK: Achskreuzpunkt
- B_{H}: Breite der Verzahnung des Honwerkzeugs
- Bz: Breite der Beveloidverzahnung des Zahnrads
- EE: Ebene
- ME: Mittenebene
- WB: Werkzeugachsenbezugspunkt
- WSA: Werkstückachse
- WZA: Werkzeugachse

- Σ: Achskreuzwinkel
- κ: Positionswinkel
- θ: Kippwinkel

## Patentansprüche

1. Verfahren zum Honen eines Zahnrads (2) mit einer Beveloidverzahnung (4), umfassend die folgenden Schritte:
a) Bereitstellen eines wenigstens abschnittsweise zylinderförmigen Honwerkzeugs (1) und eines zu honenden Zahnrads (2),
- wobei das Honwerkzeug (1) eine Werkzeugachse (WZA) und eine Verzahnung (3) aufweist, und
- wobei das Zahnrad (2) eine Werkstückachse (WSA) und eine Beveloidverzahnung (4) aufweist,
b) Honen des Zahnrads (2) mittels des Honwerkzeugs (1),
- wobei das Honwerkzeug (1) und das Zahnrad in einem Achskreuzwinkel (Σ) zueinander angeordnet sind,
- wobei das Honwerkzeug (1) und das Zahnrad (2) mit einem Achsabstand (A) wenigstens abschnittsweise zueinander beabstandet sind, und
- wobei die Verzahnung (3) des Honwerkzeugs (3) und die Beveloidverzahnung (4) des Zahnrads (2) sich in wenigstens einem Kontaktabschnitt wenigstens zeitweise kontaktieren,
**dadurch gekennzeichnet, dass**
die Werkzeugachse (WZA) und die Werkstückachse (WSA) mit einer Außermittigkeit (AM) wenigstens abschnittsweise voneinander beabstandet sind.

2. Verfahren nach Anspruch 1,
**dadurch gekennzeichnet, dass**
der Achskreuzwinkel (Σ) größer 0°, vorzugsweise wenigstens 5°, insbesondere wenigstens 10°, und/oder höchstens 25°, vorzugsweise höchstens 20°, insbesondere höchstens 15°, ist.

3. Verfahren nach Anspruch 1 oder Anspruch 2,
**dadurch gekennzeichnet, dass**
das Honwerkzeug (1), vorzugsweise die Verzahnung (3) des Honwerkzeug (1), wenigstens einen zylindrischen Abschnitt aufweist, und dass
- der zylindrische Abschnitt einen zylindrischen Kopfkreisdurchmesser-Mantel, einen zylindrischen Grundkreisdurchmesser-Mantel, einen zylindrischen Teilkreisdurchmesser-Mantel und/oder einen zylindrischen Fußkreisdurchmesser-Mantel aufweist, und/oder
- in Schritt b) der Kontaktabschnitt in dem zylindrischen Abschnitt angeordnet ist.

4. Verfahren nach einem der Ansprüche 1 bis 3,
**dadurch gekennzeichnet, dass**
in Schritt b) sich die Zahnflanke (5) wenigstens eines Zahns (6) der Verzahnung (3) des Honwerkzeugs (1) und die Zahnflanke (7) wenigstens eines Zahns (8) der Beveloidverzahnung (4) des Zahnrads (2), vorzugsweise im Kontaktabschnitt kontaktieren, und/oder dass in Schritt b) ein Linienkontakt im Kontaktabschnitt zwischen der Verzahnung (3) des Honwerkzeugs (1) und der Beveloidverzahnung (4) des Zahnrads (2), vorzugsweise der Zahnflanke (5) des wenigstens eines Zahns (6) der Verzahnung (3) des Honwerkzeugs (1) und der Zahnflanke (7) des wenigstens eines Zahns (8) der Beveloidverzahnung (4) des Zahnrads (2), vorliegt.

5. Verfahren nach einem der Ansprüche 1 bis 4,
**dadurch gekennzeichnet, dass**
die Form der beiden Zahnflanken (5) wenigstens eines Zahns (6), vorzugsweises die Form der beiden Zahnflanken (5) jeweils aller Zähne (6), der Verzahnung (3) des Honwerkzeugs (1) asymmetrisch zueinander ist.

6. Verfahren nach einem der Ansprüche 1 bis 5,
**dadurch gekennzeichnet, dass**
in Schritt b) das Zahnrad (2) und das Honwerkzeug (1) relativ zueinander verschoben werden, vorzugsweise das Zahnrad (2) entlang der Werkstückachse (WSA), vorzugsweise vor und zurück, bewegt wird und/oder das Honwerkzeug (1) entlang der Werkzeugachse (WZA), vorzugsweise vor und zurück, bewegt wird.

7. Verfahren nach einem der Ansprüche 1 bis 6,
**dadurch gekennzeichnet, dass**
in Schritt b) das Zahnrad (2) und das Honwerkzeug (1) relativ zueinander rotieren, vorzugsweise das Zahnrad (2) um die Werkstückachse (WSA) rotiert und/oder das Honwerkzeug (1) um die Werkzeugachse (WZA) rotiert.

8. Verfahren nach einem der Ansprüche 1 bis 7,
**gekennzeichnet durch**
den Schritt a1):
- Bereitstellen einer Zahnradbearbeitungsmaschine,
- wobei die Zahnradbearbeitungsmaschine wenigstens eine Translationsachse, vorzugsweise wenigstens zwei Translationsachsen, aufweist, und, vorzugsweise, wenigstens eine Rotationsachse, insbesondere wenigstens zwei Rotationsachsen und/oder wenigstens eine Schwenkachse, aufweist, und
- wobei das Honwerkzeug (1) und/oder das Zahnrad (2) entlang der wenigstens einen Translationsachse, vorzugsweise den wenigstens zwei Translationsachsen, verschoben werden kann.

9. Verfahren nach einem der Ansprüche 1 bis 8,
**dadurch gekennzeichnet, dass**
,vorzugsweise in Schritt b), die Außermittigkeit (AM), vorzugsweise ausschließlich, mittels einer Verschiebung des Honwerkzeugs (1) und/oder des Zahnrads (2), vorzugsweise entlang der Translationsachse, insbesondere einer der zwei Translationsachsen, eingestellt wird, dass, vorzugsweise in Schritt b), ein Kippwinkel (θ) zwischen der Verzahnung (3) des Honwerkzeugs (1) und der Beveloidverzahnung (4) des Zahnrads (2), vorzugsweise ausschließlich, mittels einer Verschiebung des Honwerkzeugs (1) und/oder des Zahnrads (2), vorzugsweise entlang der Translationsachse, insbesondere einer der zwei Translationsachsen, eingestellt wird und/oder dass der Kippwinkel (θ), vorzugsweise in Schritt b), nicht mittels einer Verschwenkung des Honwerkzeugs (1) und/oder des Zahnrads (2), vorzugsweise um eine Schwenkachsen der Zahnradbearbeitungsmaschine, eingestellt wird.
